# DEMANDE DE BREVET EUROPEEN

(11) **EP 0 562 987 A1**
(43) Date de publication de la demande: **29.09.1993**
(21) Numéro de dépôt: 93430003.9
(22) Date de dépôt: 09.03.1993
(51) Int. Cl.: F16B 5/06

(54) **Procédé et dispositif de jonction étanche et isolante de panneaux composites isolants**

(30) Priorité: 10.03.1992 FR 9203125
(71) Demandeur: HOLDING DURANCE LUBERON S.A.R.L., FR-84120 Pertuis (FR)
(72) Inventeur: Pisano, Jean-Marie, F-84120 Pertuis (FR)
(74) Mandataire: Marek, Pierre

(57) **Abrégé**

Procédé de fonction étanche et isolante de panneaux composites appelés à être exposés au ruissellement, suivant lequel des panneaux composites (A, B) comprenant une âme (1) en mousse rigide de matière plastique disposée entre deux parements rigides (1, 2) sont assemblés au moyen d'un organe de liaison (5) en forme de gouttière encastré, par l'intermédiaire de ses côtés, dans des rainures longitudinales (4) ménagées dans l'âme (1) desdits panneaux, caractérisé en ce que, pour réaliser l'assemblage des panneaux (A, B), on utilise un élément de fonction composite (5) dont la partie externe ou partie supérieure est constituée par un profilé (6) comportant un canal (8) s'étendant sur toute sa longueur et une ouverture médiane longitudinale (9) débouchant dans ledit canal, et dont la partie interne ou partie inférieure est constituée par une semelle ou garniture isolante (7) disposée contre la face interne ou face inférieure dudit profilé (6) et solidaire de ce dernier, cette semelle possédant un pouvoir d'isolation thermique supérieur à celui dudit profilé (6).

## Description

La présente invention concerne un procédé et un dispositif de jonction étanche et isolante de panneaux composites isolants destinés à constituer des couvertures exposées au ruissellement pluvial telles que couvertures de toitures, terrasses, loggias, balcons, galeries, bardages, etc.

Ces panneaux de type "sandwich" comprennent une âme en mousse rigide de matière plastique, disposée entre deux parements rigides, par exemple formés par des plaques d'acier ou d'aluminium laquées. Plus généralement, l'invention est applicable à la réalisation de surfaces ou parois isolantes destinées à des affectations diverses, ces surfaces ou parois pouvant être disposées sensiblement horizontalement, ou plus ou moins inclinées, ou dressées verticalement.

On a décrit, dans le document EP-A-0.354.149, un procédé et un dispositif de jonction étanche de panneaux isolants de type "sandwich" suivant lesquels des panneaux constitués d'une âme en mousse rigide de matière plastique disposée entre deux parements rigides et dont au moins deux chants parallèles sont pourvus d'une rainure longitudinale ménagée dans ladite âme de mousse rigide, sont assemblés au moyen d'un organe de liaison encastré dans lesdites rainures de deux panneaux juxtaposés, cet organe de liaison étant constitué par un profilé métallique comportant un canal s'étendant d'un bout à l'autre dudit profilé et une ouverture médiane longitudinale débouchant dans ledit canal, ledit profilé étant dimensionné et conformé pour pouvoir s'encastrer dans les rainures et dans l'âme de mousse plastique rigide de deux panneaux juxtaposés. De la sorte, le profilé de jonction des panneaux forme une gouttière qui peut recevoir l'eau qui s'infiltre ou qui s'écoule entre lesdits panneaux, et qui permet d'acheminer l'eau recueillie en direction du bord inférieur de la couverture ou autre surface ou paroi réalisée de la manière précédemment indiquée.

Ce procédé et ce dispositif qui permettent d'obtenir une jonction étanche efficace des panneaux composites isolants, ont toutefois pour inconvénient de créer des ponts thermiques constitués par l'étroite portion médiane du fond de la gouttière de jonction qui se trouve placée dans l'interstice séparant les panneaux composites assemblés. Ces ponts thermiques indésirables pour une bonne isolation, favorisent en outre le phénomène de condensation et la formation de gouttelettes sous la couverture.

Un objet de la présente invention vise à supprimer cet inconvénient.

Selon l'invention, ce but est atteint grâce à un procédé et à un dispositif suivant lesquels l'assemblage des panneaux composites isolants est réalisé au moyen d'une fausse languette ou élément de jonction composite dont la partie externe ou partie supérieure est constituée par un profilé comportant un canal s'étendant d'un bout à l'autre dudit profilé et une ouverture médiane longitudinale débouchant dans ledit canal, et dont la partie interne ou partie inférieure est constituée par une semelle ou garniture isolante disposée contre la face interne ou face inférieure dudit profilé, et possédant un pouvoir d'isolation thermique supérieur à celui du matériau dans lequel est exécuté ledit profilé.

Grâce au procédé et au dispositif de l'invention, on supprime les ponts thermiques et la formation de gouttelettes d'eau sous les couvertures, tout en assurant la jonction parfaitement étanche des panneaux.

En outre, la relative capacité de déformation élastique et la nature du matériau dans lequel est exécutée la semelle isolante de l'élément de jonction, favorise son encastrement et sa tenue dans les rainures des âmes des panneaux et assure un assemblage plus homogène des différentes parties de la couverture.

Les buts, caractéristiques et avantages ci-dessus et d'autres encore, ressortiront mieux de la description qui suit et des dessins annexés dans lesquels :
La figure 1 est une vue partielle, en perspective, montrant les bords adjacents de deux panneaux isolants et l'élément de jonction composite permettant leur assemblage étanche et isolant suivant le procédé de l'invention.
La figure 2 est une vue analogue à la figure 1 et représentant une variante d'exécution de l'organe de liaison des panneaux.
La figure 3 est une vue en coupe transversale montrant les bords adjacents de ces deux panneaux et l'élément de jonction composite, avant l'assemblage.
La figure 4 est une vue en coupe transversale analogue à la figure 3 et montrant les panneaux après assemblage au moyen de l'élément de jonction composite.
La figure 5 est une vue en coupe transversale et à plus grande échelle de l'élément de jonction composite illustré aux figures 2 à 4.

On se reporte auxdits dessins pour décrire des exemples de mises en oeuvre intéressants, quoi que nullement limitatifs, du procédé et du dispositif selon l'invention.

Le procédé de l'invention est destiné à permettre la jonction étanche et isolante de plaques ou panneaux isolants de dimensions et de natures diverses, utilisables pour constituer des couvertures de toitures ou autres surfaces ou parois.

On a représenté, sur les dessins, une application très intéressante de l'invention à l'assemblage étanche de panneaux isolants A, B de type "sandwich", principalement constitués d'une âme 1 en mousse rigide de matière plastique telle que polyuréthane, chlorure de polyvinyle, polystyrène extrudé, etc., disposée entre deux parements rigides 2, 3, par exemple formés par des plaques d'acier ou d'aluminium laquées ou recouvertes de tout autre revêtement convenable. Ces parements 2, 3 pourraient être exécutés en tout autre matériau rigide adéquat tel que polyester armé ou autre.

Les parements 2, 3 ont des bords 2a, 3a, pliés et rabattus contre les chants 1a de l'âme rigide 1, sur une portion de la hauteur de ces derniers, afin de protéger les arêtes de ladite âme. On précise toutefois que les bords des panneaux pourraient avoir toute autre forme ou profil, y compris des formes permettant un emboîtement desdits bords.

Dans deux chants opposés de l'âme 1 des panneaux, est ménagée une gorge ou rainure 4 ayant, de préférence, une section rectangulaire ou carrée et dont le fond peut être pourvu de stries ou autres aspérités. Compte tenu du mode d'utilisation précédemment évoqué des panneaux, les rainures 4 sont généralement ménagées dans les chants longitudinaux de l'âme 1 desdits panneaux.

Le bord extérieur ou bord supérieur 1c qui délimite chaque gorge ou rainure 4 des panneaux, comporte une feuillure longitudinale 1b communiquant avec ladite rainure et disposée à l'entrée de cette dernière. Cette feuillure évite que l'âme de matière plastique puisse s'imprégner d'eau, lorsque la couverture est exposée à un fort ruissellement d'eau.

Selon le procédé et le dispositif de l'invention, l'assemblage étanche et isolant des panneaux composites est réalisé au moyen d'un élément de jonction ou fausse languette composite s'encastrant, par l'intermédiaire de ses côtés opposés, dans les rainures 4 de deux panneaux A et B accolés.

Cet élément de jonction composite désigné dans son ensemble par la référence 5 comprend un profilé métallique 6, en forme de gouttière, par exemple exécuté en aluminium, et une semelle ou garniture 7 isolante disposée contre la face interne ou inférieure dudit profilé et solidaire de ce dernier.

Le profilé métallique comporte un canal longitudinal 8 s'étendant sur toute sa longueur et une ouverture médiane longitudinale 9, opposée à son fond 10 et débouchant dans ledit canal.

De manière avantageuse, ce profilé présente, en section, une forme rectangulaire et il comporte : un fond plat 10, deux parois latérales 11 perpendiculaires audit fond et deux ailes 12 d'égale largeur, disposées parallèlement audit fond, à distance de celui-ci, et rattachées auxdites parois latérales 11, les bords internes de ces ailes étant séparés par l'ouverture ou fente longitudinale médiane 9. Les bords internes 12a des ailes 12, sont pliés en direction de l'extérieur, de façon à constituer un obstacle s'opposant au passage de l'eau en direction de l'âme 1 des panneaux.

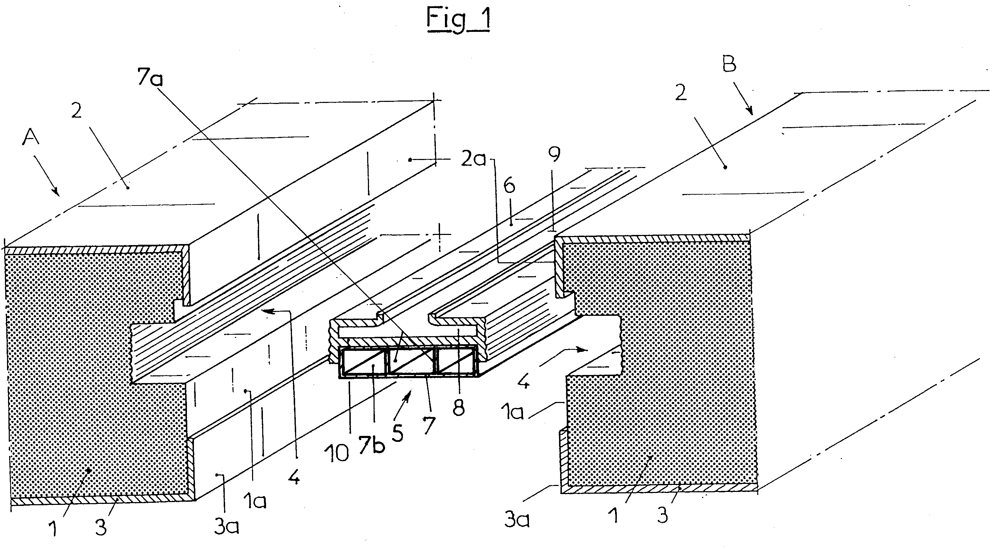

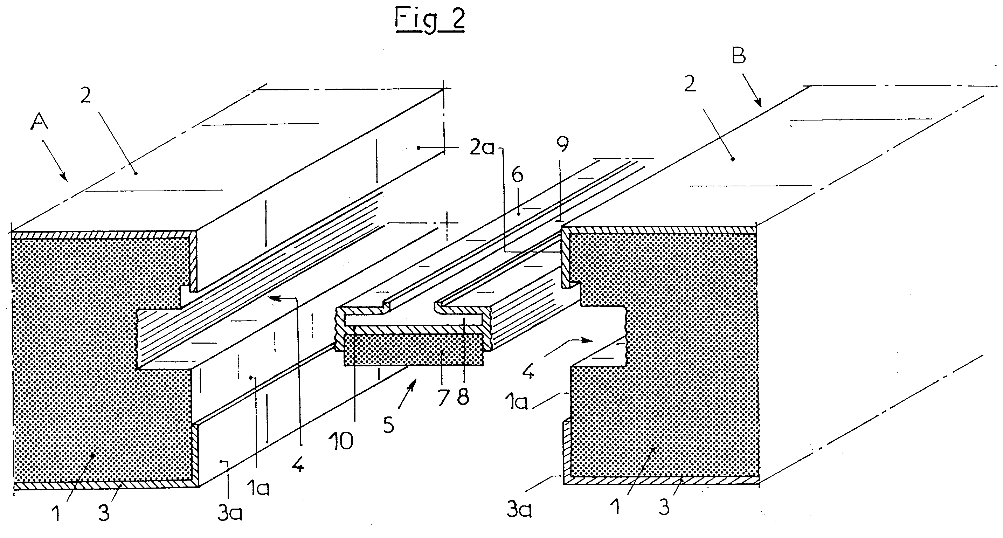

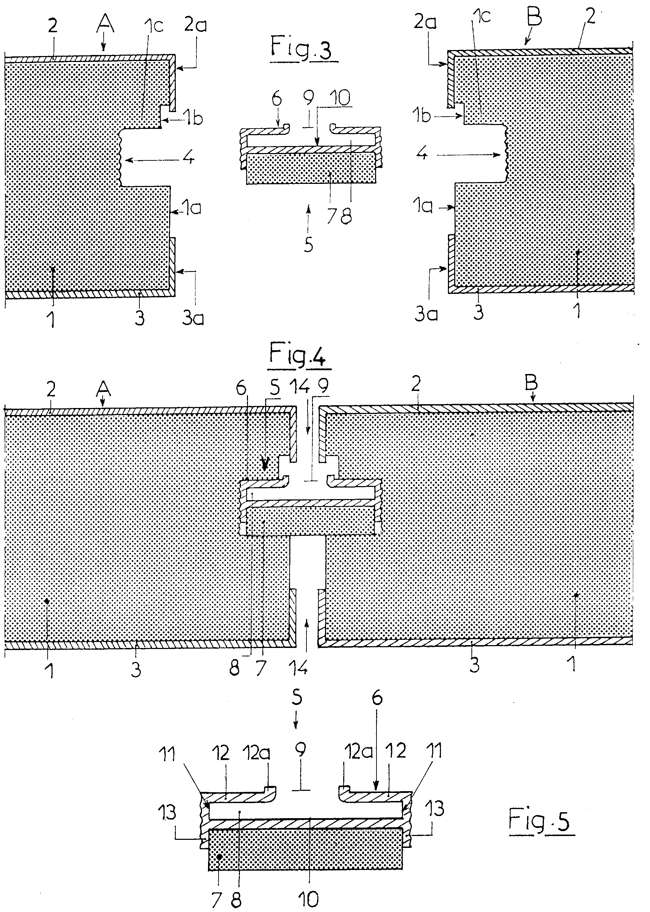

La semelle ou garniture isolante 7 est conformée ou réalisée dans un matériau isolant, de manière à présenter un pouvoir d'isolation thermique et phonique supérieur à celui du profilé métallique 6. Elle est par exemple avantageusement constituée par une garniture formée par un profilé de matière plastique extrudée telle que, par exemple, un profilé de polychlorure de vinyle (PVC) extrudé, comportant un cloisonnement inférieur 7a délimitant une pluralité de compartiments longitudinaux intérieurs 7b (figure 1). Elle peut aussi être réalisée dans un matériau isolant identique à celui dans lequel est exécutée l'âme isolante 1 des panneaux A, B, par exemple en polystyrène expansé (figures 2 à 5). Elle est fixée par collage et/ou clipage contre la face interne plane ou face inférieure du profilé 6.

De manière avantageuse, le profilé 6 comporte deux joues longitudinales 13 s'étendant vers l'arrière dudit profilé, dans le prolongement des parois latérales 11, et la semelle ou garniture isolante 7 est encastrée entre ces joues contre la face interne desquelles elle peut être collée. De la sorte, la semelle ou garniture 7 a une largeur approximativement égale à celle du profilé 6.

De préférence, les joues latérales 13 ont une largeur inférieure à l'épaisseur de la semelle ou garniture 7, ce qui confère une très légère capacité d'écrasement élastique à l'élément de jonction 5, laquelle favorise la mise en place et la tenue dudit élément dans les rainures 4.

Les faces externes des parois latérales 11 et des joues latérales 13 sont, de préférence, pourvues de stries longitudinales favorisant le collage de l'élément de jonction composite 5 ainsi réalisé, dans les rainures 4 des panneaux A et B.

La largeur de cet élément de jonction composite est un peu supérieure (par exemple de l'ordre de 3 à 5 mm) au double de la profondeur des rainures 4 des panneaux.

En position fonctionnelle d'assemblage, l'élément de jonction composite se trouve encastré et collé dans les rainures 4 de deux panneaux adjacents A et B, l'ouverture 9 du canal longitudinal 8 étant orientée vers l'extérieur de la construction, c'est-à-dire vers le haut lorsque les panneaux sont appelés à constituer une couverture de toiture. D'autre part, la semelle isolante 7 se trouve orientée vers l'intérieur, c'est-à-dire vers le bas, dans l'application susmentionnée, tandis que les bords repliés 12a des ailes 12 du profilé 6 se trouvent logés dans les feuillures 1b.

Dans cette position d'assemblage, un interstice longitudinal 14 permettant la dilatation des panneaux A et B se trouve ménagé entre les chants adjacents de ces derniers.

La portion externe ou supérieure de l'interstice 14 débouche dans l'ouverture 9 du canal 8 de l'élément de jonction 5, tandis que sa portion interne ou inférieure est fermée par la semelle isolante 7 dudit élément. On conçoit que, dans ce cas, la présence des profilés 6 assurant l'étanchéité, n'entraîne la formation d'aucun pont thermique.

On souligne que la portion inférieure et, surtout, la portion supérieure de l'interstice 14, peuvent être obturées par un joint (non représenté) constitué par un cordon de mastic souple ou par un joint réalisé en tout élastomère approprié aux conditions d'emploi.

## Revendications

1. Procédé de jonction étanche et isolante de panneaux composites appelés à être exposés au ruissellement, suivant lequel des panneaux composites (A, B) comprenant une âme (1) en mousse rigide de matière plastique disposée entre deux parements rigides (1, 2) sont assemblés au moyen d'un organe de liaison (5) en forme de gouttière encastré, par l'intermédiaire de ses côtés, dans des rainures longitudinales (4) ménagées dans l'âme (1) desdits panneaux, caractérisé en ce que, pour réaliser l'assemblage des panneaux (A, B), on utilise un élément de jonction composite (5) dont la partie externe ou partie supérieure est constituée par un profilé (6) comportant un canal (8) s'étendant sur toute sa longueur et une ouverture médiane longitudinale (9) débouchant dans ledit canal, et dont la partie interne ou partie inférieure est constituée par une semelle ou garniture isolante (7) disposée contre la face interne ou face inférieure dudit profilé (6) et solidaire de ce dernier, cette semelle possédant un pouvoir d'isolation thermique supérieur à celui dudit profilé (6).

2. Procédé de jonction étanche et isolante selon la revendication 1, caractérisé en ce que l'on utilise pour l'assemblage des panneaux (A, B), un élément de jonction composite dont la semelle isolante (7) est constituée par une garniture formée par un profilé de matière plastique extrudée, telle que, par exemple, un profilé de polychlorure de vinyle (PVC) extrudé, comportant un cloisonnement longitudinal intérieur (7a).

3. Procédé de jonction étanche et isolante selon la revendication 1, caractérisé en ce que l'on utilise, pour l'assemblage des panneaux (A, B), un élément de jonction composite (5) dont la semelle ou garniture isolante (7) est exécutée dans une matière identique à celle dans laquelle est réalisée l'âme (1) desdits panneaux.

4. Dispositif de jonction étanche et isolante de panneaux composites appelés à être exposés au ruissellement, comprenant, d'une part, des panneaux (A, B) comportant une âme (1) en mousse rigide de matière plastique, disposée entre deux parements rigides (2, 3) et pourvue de rainures longitudinales (4) sur au moins deux de ses côtés parallèles, et, d'autre part, des organes de liaison (5) en forme de gouttière, destinés à être encastrés, par l'intermédiaire de leurs côtés opposés, dans lesdites rainures longitudinales ménagées dans l'âme (1) desdits panneaux, caractérisé en ce que lesdits organes de liaison (5) sont constitués par des éléments de jonction composites comprenant, d'une part, une partie externe ou partie supérieure constituée par un profilé (6) comportant un canal (8) s'étendant sur toute sa longueur et une ouverture médiane longitudinale (9) débouchant dans ledit canal, et, d'autre part, une partie interne ou partie inférieure, constituée par une semelle ou garniture isolante (7) disposée contre la face interne ou face inférieure dudit profilé (6) et solidaire de ce dernier, cette semelle (7) possédant un pouvoir d'isolation supérieur à celui dudit profilé (6).

5. Dispositif de jonction étanche et isolante selon la revendication 4, caractérisé en ce que la semelle ou garniture isolante (7) des éléments de jonction composites (5) est constituée par un profilé de matière plastique extrudée, telle que, par exemple, polychlorure de vinyle (PVC), comportant un cloisonnement longitudinal intérieur (7a).

6. Dispositif de jonction étanche et isolante selon la revendication 4, caractérisé en ce que la semelle ou garniture isolante (7) des éléments de jonction composites (5) est exécutée dans une matière identique à celle dans laquelle est réalisée l'âme (1) des panneaux composites (A, B).

7. Dispositif de jonction étanche et isolante selon l'une quelconque des revendications 4 à 6, suivant lequel le profilé (6) des éléments de jonction composites (5) a une section rectangulaire et comporte : un fond plat (10), deux parois latérales (11) perpendiculaires audit fond et deux ailes (12) d'égale largeur, disposées parallèlement au fond (10), à distance de celui-ci, et rattachées auxdites parois latérales, les bords internes (12a) desdites ailes (12) délimitant l'ouverture longitudinales (9) dudit profilé (6), caractérisé en ce que ce dernier comporte encore deux joues longitudinales (13) orientées vers l'arrière et disposées dans le prolongement de ses parois latérales (11), et en ce que la semelle ou garniture isolante (7) est encastrée entre ces joues longitudinales (13).

8. Dispositif de jonction étanche et isolante suivant la revendication 7, caractérisé en ce que le bord interne (12a) des ailes (12) du profilé (6) est plié en direction de l'extérieur.

9. Dispositif de jonction étanche et isolante selon l'une des revendications 7 ou 8, caractérisé en ce que la semelle ou garniture isolante (7) a une épaisseur supérieure à la largeur des joues latérales (13) du profilé (6).

10. Dispositif de jonction étanche et isolante suivant l'une quelconque des revendications 4 à 9, caractérisé en ce que le bord extérieur ou bord supérieur (1c) qui délimite chaque rainure (4) des panneaux, comporte une feuillure longitudinale (1b) à l'entrée de ladite rainure (4).
